(19) Europäisches Patentamt
European Patent Office
Office européen des brevets

(11) EP 4 765 220 A1

(12) EUROPEAN PATENT APPLICATION
published in accordance with Art. 153(4) EPC

(43) Date of publication:
24.06.2026 Bulletin 2026/26

(21) Application number: 24903962.9

(22) Date of filing: 30.10.2024

(51) International Patent Classification (IPC):
H01M 4/13 (2010.01)    H01M 4/36 (2006.01)
H01M 4/587 (2010.01)    H01M 10/054 (2010.01)
H01M 4/02 (2006.01)

(52) Cooperative Patent Classification (CPC):
H01M 4/02; H01M 4/13; H01M 4/36; H01M 4/587;
H01M 10/054; Y02E 60/10

(86) International application number:
PCT/KR2024/016819

(87) International publication number:
WO 2025/127395 (19.06.2025 Gazette 2025/25)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 12.12.2023 KR 20230179484
29.10.2024 KR 20240150135

(71) Applicant: LG Energy Solution, Ltd.
Seoul 07335 (KR)

(72) Inventors:
• SONG, Myeong Jun
  Daejeon 34122 (KR)
• KIM, Myeong Seong
  Daejeon 34122 (KR)
• LEE, Ho In
  Daejeon 34122 (KR)
• HAH, Hoe Jin
  Daejeon 34122 (KR)

(74) Representative: BCKIP Part mbB
Landsberger Straße 98
80339 München (DE)

(54) **ANODE FOR SODIUM SECONDARY BATTERY, AND SODIUM SECONDARY BATTERY COMPRISING SAME**

(57) The present invention relates to a negative electrode for a sodium secondary battery including a current collector; a lower negative electrode active material layer disposed on the current collector; and an upper negative electrode active material layer disposed on the lower negative electrode active material layer, wherein the lower negative electrode active material layer includes a first negative electrode active material particle and a second negative electrode active material particle, the upper negative electrode active material layer includes a third negative electrode active material particle and a fourth negative electrode active material particle, each of the first negative electrode active material particle to the fourth negative electrode active material particle includes hard carbon, an average particle diameter ($D_{50}$) of the first negative electrode active material particle is larger than an average particle diameter ($D_{50}$) of the second negative electrode active material particle, an average particle diameter ($D_{50}$) of the third negative electrode active material particle is larger than an average particle diameter ($D_{50}$) of the fourth negative electrode active material particle, a weight of the first negative electrode active material particle is greater than a weight of the second negative electrode active material particle, and a weight of the third negative electrode active material particle is less than a weight of the fourth negative electrode active material particle.

FIG. 1

10

Description

## TECHNICAL FIELD

### Cross-reference to Related Applications

This application claims the benefit of priority from Korean Patent Application Nos. 10-2023-0179484, filed on December 12, 2023, 10-2024-0150135, filed on October 29, 2024, the disclosures of which are incorporated by reference herein.

### Technical Field

The present invention relates to a negative electrode for a sodium secondary battery and a sodium secondary battery including the same.

### BACKGROUND ART

A secondary battery is a battery that may be repetitively used through a process of discharging that converts chemical energy into electrical energy and a process of charging that coverts in the reverse direction, and recently, demand for the secondary battery is rapidly increasing as mobile electronic products, electric vehicles, etc. are being commercialized. A lithium secondary battery is used as the secondary battery currently being commercialized, but lithium, as the main raw material, has a limited reserve and is expensive, and is not enough to meet the demand for the secondary battery. Therefore, development of a new secondary battery, which may replace the lithium secondary battery, has been required, and recently, research and development on a sodium secondary battery, using sodium instead of lithium, has been actively conducted.

However, since sodium ions have a relatively large size compared to lithium ions, the movement speed is low, and reaction activity is also not excellent, and thus, when the negative electrode active material which has been used in a conventional lithium secondary battery is used, there are problems that the sodium secondary battery fails to exhibit the capacity characteristics that used to be exhibited in the lithium secondary battery, or the capacity deteriorates rapidly and its characteristics are reduced.

To solve the above problems, there is a trend to use hard carbon as a negative electrode active material for the sodium secondary battery. It is because the hard carbon has a relatively large d-spacing $(d_{002})$ compared to graphite that is generally used in the lithium secondary battery, and has a disorderly porous structure, so that sodium ions, having a larger radius than that of lithium ions, are easily stored.

However, in case of a negative electrode applied with a single-layer negative electrode active material layer where a negative electrode active material containing hard carbon is used, there are problems such as poor output characteristics due to a low specific surface area of hard carbon, and separation of a current collector and the negative electrode active material layer due to low adhesive force of hard carbon.

Therefore, to solve the above problems, development of a negative electrode for a sodium secondary battery, which has excellent adhesive force between the current collector and the negative electrode active material layer while having further improved output characteristics, is being required.

## DISCLOSURE OF THE INVENTION

### TECHNICAL PROBLEM

A task of the present invention is to solve the above problems by providing a negative electrode for a sodium secondary battery having excellent output characteristics with low resistance, and also having excellent adhesive force between a current collector and a negative electrode active material layer, which may prevent a phenomenon of separation between the current collector and the negative electrode active material layer.

In addition, another task of the present invention is to provide a sodium secondary battery including the negative electrode for a sodium secondary battery previously described.

### TECHNICAL SOLUTION

[1] The present invention provides a negative electrode for a sodium secondary battery including a current collector; a lower negative electrode active material layer disposed on the current collector; and an upper negative electrode active material layer disposed on the lower negative electrode active material layer, the lower negative electrode active material layer includes a first negative electrode active material particle and a second negative electrode active material particle, the upper negative electrode active material layer includes a third negative electrode active material particle and a fourth negative electrode active material particle, each of the first negative electrode active material particle to the fourth negative electrode active material particle includes hard carbon, an average particle diameter ($D_{50}$) of the first negative electrode active material particle is larger than an average particle diameter ($D_{50}$) of the second negative electrode active material particle, an average particle diameter ($D_{50}$) of the third negative electrode active material particle is larger than an average particle diameter ($D_{50}$) of the fourth negative electrode active material particle, a weight of the first negative electrode active material particle is greater than a weight of the second negative electrode active material particle, and a weight of the third negative electrode active material particle is less than a weight of the fourth negative electrode active material particle.

[2] In the present invention of [1] above, the first negative electrode active material particle to the fourth negative electrode active material particle may each have a sphere shape.

[3] In the present invention of [1] or [2] above, a weight ratio of the first negative electrode active material particle and the second negative electrode active material particle may be 51:49 to 99:1.

[4] In the present invention of at least one of [1] to [3] above, an average particle diameter ($D_{50}$) ratio of the first negative electrode active material particle to the second negative electrode active material particle may be 1.1 to 10.

[5] In the present invention of at least one of [1] to [4] above, the first negative electrode active material particle may have an average particle diameter ($D_{50}$) of 5 $\mu$m to 15 $\mu$m, and the second negative electrode active material particle may have an average particle diameter ($D_{50}$) of 1 $\mu$m to 10 $\mu$m.

[6] In the present invention of at least one of [1] to [5] above, the first negative electrode active material particle may have a BET specific surface area of 1 $m^2$/g to 10 $m^2$/g, and the second negative electrode active material particle may have a BET specific surface area of 1.5 $m^2$/g to 12 $m^2$/g.

[7] In the present invention of at least one of [1] to [6] above, the lower negative electrode active material layer may have a thickness of 30 $\mu$m to 200 $\mu$m.

[8] In the present invention of at least one of [1] to [7] above, the lower negative electrode active material layer may have a loading amount of 12.5 mg/25 $cm^2$ to 250 mg/25 $cm^2$.

[9] In the present invention of at least one of [1] or [8] above, a weight ratio of the third negative electrode active material particle and the fourth negative electrode active material particle may be 1:99 to 49:51.

[10] In the present invention of at least one of [1] to [9] above, an average particle diameter ($D_{50}$) ratio of the third negative electrode active material particle to the fourth negative electrode active material particle may be 1.1 to 10.

[11] In the present invention of at least one of [1] to [10] above, the third negative electrode active material particle may have an average particle diameter ($D_{50}$) of 3 $\mu$m to 13 $\mu$m, and the fourth negative electrode active material particle may have an average particle diameter ($D_{50}$) of 1 $\mu$m to 8 $\mu$m.

[12] In the present invention of at least one of [1] to [11] above, the third negative electrode active material particle may have a BET specific surface area of 1 $m^2$/g to 10 $m^2$/g, and the fourth negative electrode active material particle may have a BET specific surface area of 2 $m^2$/g to 14 $m^2$/g.

[13] In the present invention of at least one of [1] to [12] above, the upper negative electrode active material layer may have a thickness of 30 $\mu$m to 200 $\mu$m.

[14] In the present invention of at least one of [1] to [13] above, the upper negative electrode active material layer may have a loading amount of 12.5 mg/25 $cm^2$ to 250 mg/25 $cm^2$.

[15] The present invention provides a sodium secondary battery including the negative electrode for a sodium secondary battery of at least one of [1] to [14] above.

## ADVANTAGEOUS EFFECTS

A negative electrode for a sodium secondary battery according to the present invention is characterized by providing a double-layered negative electrode active material layer on a current collector, including a large amount of negative electrode active material particles containing hard carbon with a large particle diameter in a lower negative electrode active material layer, and including a large amount of negative electrode active material particles containing hard carbon with a small particle diameter in an upper negative electrode active material layer, and according to the double-layered structure of the negative electrode active material layer and a weight ratio of the negative electrode active material with a large particle diameter and the negative electrode active material with a small particle diameter, included in the lower and upper negative electrode active material layers, excellent output characteristics may be achieved, and also, adhesion between a current collector and the negative electrode active material layer may be improved.

Therefore, in case of applying the negative electrode for a sodium secondary battery according to the present invention to a sodium secondary battery, it may be possible to achieve the sodium secondary battery having excellent structural stability while having excellent output characteristics.

## BRIEF DESCRIPTION OF THE DRAWINGS

The drawings accompanied in the present specification illustrates preferred embodiments of the present invention, and serve to better understand the technical idea of the present invention together with the content of the present invention previously described, therefore, the present invention is not to be construed as limited to only the matters described in the drawings. Meanwhile, a shape, size, scale, ratio, or the like of an element in the drawing accompanied in this specification may be exaggerated to emphasize the description more clearly.

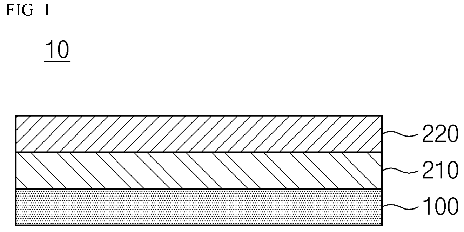

FIG. 1 is a schematic side view illustrating a negative electrode according to an embodiment of the present invention.

## MODE FOR CARRYING OUT THE INVENTION

Hereinafter, a preferred embodiment of the present invention is described.

It will be understood that terms or words used in the specification and claims shall not be interpreted as the meaning defined in commonly used dictionaries, and it will be further understood that the terms or words should be interpreted as having a meaning that is consistent with their meaning in the context of the relevant art and the technical idea of the invention, based on the principle that an inventor may properly define the meaning of the terms or words to best explain the invention.

The terminology used in this specification is for describing embodiments and is not intended to limit the present invention. In this specification, the singular forms are intended to include the plural forms as well, unless the context clearly indicates otherwise. The terms "comprises" and/or "comprising" used in this specification do not exclude the presence or addition of one or more other components.

In the present invention, the average particle diameter ($D_{50}$) refers to a particle size at 50% cumulative volume in a particle size distribution of powder to be measured. The average particle diameter ($D_{50}$) may be measured using a laser diffraction method. For example, after the powder to be measured is dispersed in a dispersion medium, the dispersion medium is introduced into a commercial laser diffraction particle size measurement instrument (e.g., Microtrac MT 3000) and irradiated with ultrasonic waves of about 28 kHz at an output of 60 W, and then a cumulative volume particle size distribution graph is obtained, and the particle size corresponding to 50% of the cumulative volume may then be calculated therefrom to measure the average particle diameter ($D_{50}$).

In the present invention, the "specific surface area" may be measured by a BET method, and preferably, may be calculated from the absorption amount of nitrogen gas under a liquid nitrogen temperature (77 K) using a BELSORP-mino II of BEL Japan.

In the present invention, the porosity may be calculated by Mathematical Equation A below.

$$\text{[Mathematical Equation A]}$$

$$\text{Porosity (\%)} = \{1 - (\text{real density/true density})\} \times 100$$

In Mathematical Equation A above, the real density is a density of a particular negative electrode active material layer including pores, and the true density is a density of solid (solid constituting the particular negative electrode active material layer) not including pores. For example, the porosity of a lower negative electrode active material layer may be calculated by defining the density of the lower negative electrode active material layer including pores as a real density, and defining the density of the solid (solid constituting the lower negative electrode active material layer) not including pores as a true density, and the porosity of an upper negative electrode active material layer may be calculated by defining the density of the upper negative electrode active material layer including pores as a real density, and the density of the solid (solid constituting the upper negative electrode active material layer) not including pores as a true density. In addition, as another example, the porosity of the negative electrode may be calculated by defining the density of the negative electrode active material layer including pores as a real density, and the density of solid (solid constituting the negative electrode active material layer) not including pores as a true density.

## Negative Electrode for Sodium Secondary Battery

Hereinafter, a negative electrode for a sodium secondary battery according to the present invention is described.

Referring to FIG. 1, the negative electrode 10 for a sodium secondary battery according to the present invention includes a current collector 100; a lower negative electrode active material layer 210 disposed on the current collector 100; and an upper negative electrode active material layer 220 disposed on the lower negative electrode active material layer 210, the lower negative electrode active material layer 210 includes a first negative electrode active material particle and a second negative electrode active material particle, the upper negative electrode active material layer 220 includes a third negative electrode active material particle and a fourth negative electrode active material particle, each of the first negative electrode active material particle to the fourth negative electrode active material particle includes hard carbon, an average particle diameter ($D_{50}$) of the first negative electrode active material particle is larger than an average particle diameter ($D_{50}$) of the second negative electrode active material particle, an average particle diameter ($D_{50}$) of the third negative electrode active material particle is larger than an average particle diameter ($D_{50}$) of the fourth negative electrode active material particle, a weight of the first negative electrode active material particle is greater than a weight of the second negative electrode active material particle, and a weight of the third negative electrode active material particle is less than a weight of the fourth negative electrode active material particle.

In case of a conventionally used negative electrode for a sodium secondary battery, a negative electrode active material including hard carbon was used, and a negative electrode active material layer in a single layer was applied. In this case, output characteristics may be poor due to a low specific surface area of hard carbon, or separation of a current collector and a negative electrode active material layer may occur due to low adhesive force of hard carbon, thereby causing a problem of reducing electrochemical characteristics of a battery.

As a result of continuous research conducted in order to solve the above problems, the present inventors discovered that, when a negative electrode active material layer is provided in double layers on a current collector, a large amount of negative electrode active material particles containing hard carbon with a large particle diameter are included in a lower negative electrode active material layer, and a large amount of negative electrode active material particles containing hard carbon with a small particle diameter are included in an upper negative electrode active material layer, excellent output characteristics may be achieved, and also adhesion between the current collector and the negative electrode active material layer may be improved, and therefore, the present inventors have completed the present invention.

For example, the negative electrode 10 for a sodium secondary battery according to the present invention includes the current collector 100; the lower negative electrode active material layer 210 disposed on the current collector 100; and the upper negative electrode active material layer 220 disposed on the lower negative electrode active material layer 210.

(1) Current Collector 100

The current collector 100 is not particularly limited as long as it does not cause chemical change in a battery, and has high conductivity. Preferably, as the current collector 100, copper, stainless steel, aluminum, nickel, titanium, calcined carbon, copper or stainless steel that is surface-treated with carbon, nickel, titanium, silver, etc., an aluminum-cadmium alloy, etc. may be used.

The current collector 100 may generally have a thickness of 3 to 500 $\mu$m.

The current collector 100 may also have microscopic irregularities on a surface to strengthen binding force of a negative electrode active material. For example, the current collector 100 may be used in various forms including a film, a sheet, a foil, a net, a porous body, a foam body, a non-woven fiber body, etc.

(2) Lower Negative Electrode Active Material Layer 210

Hereinafter, a preferred embodiment of the lower negative electrode active material layer 210 is described.

The lower negative electrode active material layer 210 may be disposed on the current collector 100, preferably, disposed on at least one side of the current collector 100, and more preferably, disposed on one side or both sides of the current collector 100. Even more preferably, the lower negative electrode active material layer 210 may be directly in contact with the surface of the current collector 100.

The lower negative electrode active material layer 210 includes a first negative electrode active material particle and a second negative electrode active material particle. An average particle diameter ($D_{50}$) of the first negative electrode active material particles is larger than an average particle diameter ($D_{50}$) of the second negative electrode active material particles. Each of the first negative electrode active material particle and the second negative electrode active material particle includes hard carbon.

The weight of the first negative electrode active material particles is greater than the weight of the second negative electrode active material particles. Preferably, the weight of the first negative electrode active material particles included in the lower negative electrode active material layer 210 may be greater than the weight of the second negative electrode active material particles included in the lower negative electrode active material layer 210.

For example, the lower negative electrode active material layer 210, including the first negative electrode active material particle with the large particle diameter and the second negative electrode active material particle with the small particle diameter, may be a layer directly in contact with the current collector 100, where separation between the negative electrode active material layer and the current collector 100 may occur due to volume expansion and contraction of the negative electrode active material in case of intercalation /deintercalation of sodium ions. To solve this problem, the lower negative electrode active material layer 210 according to the present invention includes the first negative electrode active material particles with the large particle diameter in a larger weight than that of the second negative electrode active material particles with the small particle diameter, compared to the case of the upper negative electrode active material layer 220 to be described later. Since the lower negative electrode active material layer 210 includes the first negative electrode active material particles with the large particle diameter in a larger weight than that of the second negative electrode active material particles with the small particle diameter, a binder that may be included in the lower negative electrode active material layer 210 may serve more in binding to the current collector 100 than binding of the first and second negative electrode active material particles, so that excellent adhesive force between the current collector 100 and the negative electrode active material layer may be achieved, and separation between the negative electrode active material layer and the current collector 100 may be prevented, thereby improving the entire structural stability of the negative electrode.

Meanwhile, in case of including the first negative electrode active material particles with the large particle diameter alone in the lower negative electrode active material layer 210 in order to achieve high adhesive force with the current collector 100, the size of pores formed by the first negative electrode active material particles may be large, and accordingly, sodium ions may not be transmitted well, causing a problem of reducing output characteristics, and due to the increased size of the pores, the thickness of an electrode may increase to cause a problem of reducing the energy density of the battery per unit volume. Therefore, the negative electrode 10 for a sodium secondary battery according to the present invention is characterized that since the second negative electrode active material particles with the small particle diameter are included in a less weight than that of the first negative electrode active material particles with the large particle diameter in the lower negative electrode active material layer 210, output characteristics are improved, and also, since the first negative electrode active material particles with the large particle diameter are included in a greater weight than that of the second negative electrode active material particles with the small particle diameter, adhesion characteristics are maximized.

In addition, since each of the first negative electrode active material particle and the second negative electrode active material particle includes hard carbon, sodium ions which have a relatively larger radius than that of lithium ions may be easily stored, and therefore, more excellent discharge capacity characteristics may be achieved.

The first negative electrode active material particle and the second negative electrode active material particle may each have a spherical shape. When each of the particles has a spherical shape, due to spherical structural characteristics, the negative electrode active material particles may be stacked in close contact with each other, and therefore, high density of the negative electrode may be achieved, and thus, the energy density per unit volume of a battery may be improved.

Preferably, the degree of sphericity of each of the first negative electrode active material particle and the second negative electrode active material particle may be independently 0.8 to 1, preferably 0.85 to 1.0, and more preferably 0.9 to 1. When the degree falls within the above ranges, it is preferable in that ionic conductivity may be excellent while high density of the negative electrode is achieved.

The degree of sphericity may be defined as a value obtained by dividing the circumference of a circle in the same area as a projected image of the negative electrode active material particle by the length of circumference of the projected image of the negative electrode active material particle. Preferably, the degree of sphericity may be defined by Mathematical Equation B below.

Degree of sphericity = (circumference of circle in same area as projected image of negative electrode active material particle) / (length of circumference of projected image of    [Mathematical Equation B]
negative electrode active material particle)

The degree of sphericity may be measured using a particle analyzer, for example, sysmex FPIA3000(manufactured by Mavern). The degree of sphericity, according to the present invention, may be defined as an average value of the degree of sphericity values for 10 particles randomly selected from the negative electrode active material.

A weight ratio of the first negative electrode active material particles and the second negative electrode active material particles may be 51:49 to 99:1, preferably 55:45 to 95:5, and more preferably 60:40 to 90:10. When the ratio falls within the above ranges, the amount of negative electrode active material particles with the large particle diameter, included in the lower negative electrode active material layer 210, may become large, so that separation between the current collector 100 and the negative electrode active material layer may be prevented, and also, the negative electrode active material particles with the small particle diameter may be included in an appropriate amount to provide excellent output characteristics.

An average particle diameter ($D_{50}$) ratio of the first negative electrode active material particle to the second negative electrode active material particle may be 1.1 to 10. Preferably, the average particle diameter ($D_{50}$) ratio of the first negative electrode active material particle to the second negative electrode active material particle may be 1.1 or greater, 1.15 or greater, 1.20 or greater, 1.25 or greater, or 1.30 or greater, and 10 or less, 8 or less, 7 or less, 6 or less, 5 or less, 4.5 or less, 4 or less, 3.5 or less, 3.0 or less, or 2.5 or less. More preferably, the average particle diameter ($D_{50}$) ratio of the first negative electrode active material particle to the second negative electrode active material particle may be 1.1 to 2.5. When the ratio falls within the above ranges, it is preferable in that the filling rate between the negative electrode active material particles may increase, so that a high-density electrode may be achieved.

The average particle diameter ($D_{50}$) of the first negative electrode active material particle may be 5 $\mu$m to 15 $\mu$m. Preferably, the average particle diameter ($D_{50}$) of the first negative electrode active material particle may be 5 $\mu$m or greater, 6 $\mu$m or greater, 7 $\mu$m or greater, or 8 $\mu$m or greater, and 14 $\mu$m or less, 13 $\mu$m or less, 12 $\mu$m or less, or 11 $\mu$m or less. More preferably, the average particle diameter ($D_{50}$) of the first negative electrode active material particle may be 8 $\mu$m to 11 $\mu$m. When the average particle diameter falls within the above ranges, on an interface between the current collector 100 and the lower negative electrode active material layer 210, the contact area between a binder and the current collector 100 may be more increased than the contact area between the binder and the negative electrode active material particle, adhesion characteristics of the electrode may thus be improved.

The average particle diameter ($D_{50}$) of the second negative electrode active material particle may be 1 $\mu$m to 10 $\mu$m. Preferably, the average particle diameter ($D_{50}$) of the second negative electrode active material particle may be 1 $\mu$m or greater, 2 $\mu$m or greater, 3 $\mu$m or greater, 4 $\mu$m or greater, or 4.5 $\mu$m or greater, and 10 $\mu$m or less, 9 $\mu$m or less, 8.5 $\mu$m or less, or 8 $\mu$m or less. More preferably, the average particle diameter ($D_{50}$) of the second negative electrode active material particle may be 4.5 $\mu$m to 8 $\mu$m. When the particle diameter falls within the above ranges, ionic and electro conductivity in the negative electrode active material particle may be improved, so that the output characteristics may be improved.

The first negative electrode active material particle may have a BET specific surface area of 1 $m^2$/g to 10 $m^2$/g. Preferably, the BET specific surface area of the first negative electrode active material particle may be 1 $m^2$/g or greater, 1.5 $m^2$/g or greater, or 2 $m^2$/g or greater, and 10 $m^2$/g or less, 9 $m^2$/g or less, 8 $m^2$/g or less, 7 $m^2$/g or less, 6 $m^2$/g or less, 5$m^2$/g or less, or 4 $m^2$/g or less. More preferably, the first negative electrode active material particle may have a BET specific surface area of 2 $m^2$/g to 4 $m^2$/g. When the BET specific surface area falls within the above ranges, it may be preferable in that a side reaction between the negative electrode active material particle and an electrolyte is not excessive, so that lifetime characteristics of a battery may be improved.

The second negative electrode active material particle may have a BET specific surface area of 1.5 $m^2$/g to 12 $m^2$/g. Preferably, the BET specific surface area of the second negative electrode active material particle may be 1.5 $m^2$/g or greater, 2 $m^2$/g or greater, 2.5 $m^2$/g or greater, or 3 $m^2$/g or greater, and 12 $m^2$/g or less, 11 $m^2$/g or less, 10 $m^2$/g or less, 9 $m^2$/g or less, 8 $m^2$/g or less, 7$m^2$/g or less, 6 $m^2$/g or less, or 5 $m^2$/g or less. More preferably, the second negative electrode active material particle may have a BET specific surface area of 3 $m^2$/g to 5 $m^2$/g. When the BET specific surface area falls within the above ranges, it may be preferable in that a side reaction between the negative electrode active material particle and an electrolyte is not excessive, so that lifetime characteristics of a battery may be improved.

The lower negative electrode active material layer 210 may have a thickness of 30 $\mu$m to 200 $\mu$m. Preferably, the thickness of the lower negative electrode active material layer 210 may be 30 $\mu$m or greater, 40 $\mu$m or greater, 50 $\mu$m or greater, 60 $\mu$m or greater, or 70 $\mu$m or greater, and 200 $\mu$m or less, 180 $\mu$m or less, 160 $\mu$m or less, 140 $\mu$m or less, or 130 $\mu$m or less. More preferably, the lower negative electrode active material layer 210 may have a thickness of 60 $\mu$m to 130 $\mu$m.

The lower negative electrode active material layer 210 may have a loading amount of 12.5 $mg/25$ $cm^2$ to 250 $mg/25$ $cm^2$. Preferably, the loading amount of the lower negative electrode active material layer 210 may be 12.5 $mg/25$ $cm^2$ or greater, 17.5 $mg/25$ $cm^2$ or greater, 22.5 $mg/25$ $cm^2$ or greater, 37.5 $mg/25$ $cm^2$ or greater, 42.5 $mg/25$ $cm^2$ or greater, 50 $mg/25$ $cm^2$ or greater, 55 $mg/25$ $cm^2$ or greater, or 60 $mg/25$ $cm^2$ or greater, and 250 $mg/25$ $cm^2$ or less, 200 $mg/25$ $cm^2$ or less, 175 $mg/25$ $cm^2$ or less, 150 $mg/25$ $cm^2$ or less, or 125 $mg/25$ $cm^2$ or less. More preferably, the lower negative electrode active material layer 210 may have a loading amount of 60 $mg/25$ $cm^2$ to 125 $mg/25$ $cm^2$.

The lower negative electrode active material layer 210 may have a porosity of 20% to 70%. Preferably, the porosity of the lower negative electrode active material layer 210 may be 23% or greater, 25% or greater, 27% or greater, 30% or greater, 33% or greater, or 35% or greater, and 70% or less, 65% or less, 60% or less, or 55% or less. More preferably, the porosity of the lower negative electrode active material layer 210 may be 35% to 55%. The porosity may be calculated by Mathematical Equation A previously described. When the porosity falls within the above ranges, the energy density per unit volume of a battery may increase, and the contact between the active material particles may become easy, so that the output characteristics may be improved.

The first negative electrode active material particle and the second negative electrode active material particle may be included in an amount of 60 wt% to 99 wt%, and preferably 75 wt% to 95 wt% in the lower negative electrode active material layer 210.

The lower negative electrode active material layer 210 may further include a first binder and/or a first conductive material, together with the first negative electrode active material particle and the second negative electrode active material particle.

The first binder may be used for binding between the first negative electrode active material particles and/or the second negative electrode active material particles, or adhesion between the lower negative electrode active material layer 210 and the current collector 100. For example, the first binder may include at least any one selected from the group consisting of polyvinylidene fluoride-hexafluoropropylene copolymer (PVDF-co-HFP), polyvinylidenefluoride (PVDF), polyacrylonitrile, polymethylmethacrylate, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, polyacrylic acid, an ethylene-propylene-diene monomer (EPDM), a sulfonated EPDM, a styrene-butadiene rubber (SBR), fluorine rubber, and materials with hydrogen thereof being substituted with Li, Na, Ca, or the like, or may also include various copolymers thereof.

The first binder may be included in an amount of 0.5 wt% to 10 wt%, and preferably 1 wt% to 5 wt% in the lower negative electrode active material layer 210.

The first conductive material may not be particularly limited as long as it does not cause chemical change in the relevant battery and has conductivity, and for example, graphite such as natural graphite or artificial graphite; carbon black including carbon black, acetylene black, ketjen black, channel black, furnace black, lamp black, thermal black, etc.; a conductive fiber such as a carbon fiber or metal fiber; a conductive tube such as a carbon nanotube; fluorocarbon; metal powder including aluminum power, nickel powder, etc.; a conductive whisker including zinc oxide, potassium titanate, etc.; a conductive metal oxide such as titanium oxide; a conductive material such as a polyphenylene derivative may be used.

The first conductive material may be included in an amount of 0.5 wt% to 10 wt%, and preferably in an amount of 1 wt% to 5 wt% in the lower negative electrode active material layer 210.

(3) Upper Negative Electrode Active Material Layer 220

Hereinafter, the upper negative electrode active material layer 220 is described.

The upper negative electrode active material layer 220 is disposed on the lower negative electrode active material layer 210. Preferably, the upper negative electrode active material layer 220 may be disposed on the opposite surface of the surface of the lower negative electrode active material layer 210 on which the lower negative electrode active material layer 210 is in contact with the current collector 100. More preferably, the upper negative electrode active material layer 220 may be present on the outermost surface of the negative electrode. In addition, the upper negative electrode active material layer 220 may be present on the outermost surface of the negative electrode, and may face a separator to be described later.

In addition, when the lower negative electrode active material layer 210 is present on one and the other sides of the current collector 100, the upper negative electrode active material layer 220 may be disposed on the surface of each of the lower negative electrode active material layers 210 respectively disposed on one and the other sides of the current collector 100.

The upper negative electrode active material layer 220 includes a third negative electrode active material particle and a fourth negative electrode active material particle. An average particle diameter ($D_{50}$) of the third negative electrode active material particle is larger than an average particle diameter ($D_{50}$) of the fourth negative electrode active material particle. Each of the third negative electrode active material particle and the fourth negative electrode active material particle includes hard carbon.

The weight of the third negative electrode active material particles is less than the weight of the fourth negative electrode active material particles. Preferably, the weight of the third negative electrode active material particles included in the lower negative electrode active material layer 210 may be less than the weight of the fourth electrode active material particles included in the lower negative electrode active material layer 210.

Preferably, the upper negative electrode active material layer 220 including the third negative electrode active material particle with the large particle diameter and the fourth negative electrode active material particle with the small particle diameter may be present on the outermost surface of the negative electrode, the position where sodium ions are directly transmitted from a positive electrode. Compared to the lower negative electrode active material layer 210 previously described, since the upper negative electrode active material layer 220 includes the third negative electrode active material particles with the large particle diameter in a less weight than that of the fourth negative electrode active material particles with the smaller particle diameter, pores formed by the active material particles in the upper negative electrode active material layer 220 may be minimized, and the sodium ions may be transmitted uniformly, and therefore, the entire output characteristics of the negative electrode may be improved.

Meanwhile, in case of including the fourth negative electrode active material particles with the small particle diameter alone in the upper negative electrode active material layer 220 in order to achieve excellent output characteristics, due to formation of a SEI film on a surface of the negative electrode active material particles with the small particle diameter having a large specific surface area, electrolyte decomposition may be accelerated to reduce electrochemical characteristics of a battery, and increased amount of binders may be required for preventing the problem of electrode deintercalation, so that problems of increased electrolyte side reactions and decreased energy density per unit volume of the battery may be caused. Therefore, the negative electrode 10 for a sodium secondary battery according to the present invention is characterized that since the third negative electrode active material particles with the large particle diameter are included in a less weight than that of the fourth negative electrode active material particles with the small particle diameter in the upper negative electrode active material layer 220, adhesion characteristics are improved, and also, since the fourth negative electrode active material particles with the small particle diameter are included in a larger weight than that of the third negative electrode active material particles with the large particle diameter, output characteristics may be maximized.

In addition, since each of the third negative electrode active material particle and the fourth negative electrode active material particle includes hard carbon, sodium ions, which have a larger radius than that of lithium ions, may be easily stored, so that excellent discharge capacity characteristics may be achieved.

The third negative electrode active material particle and the fourth negative electrode active material particle may each have a spherical shape. When each of the particles has a spherical shape, due to spherical structural characteristics, the negative electrode active material particles may be stacked in close contact with each other, and therefore, high density of the negative electrode may be achieved, and thus the energy density per unit volume of a battery may be improved.

Particularly, the degree of sphericity of each of the third negative electrode active material particle and the fourth negative electrode active material particle may be independently 0.8 to 1, preferably 0.85 to 1.0, and more preferably 0.9 to 1. When the degree falls within the above ranges, it is preferable in that ionic conductivity may be excellent while high density of the negative electrode is achieved.

The degree of sphericity may be defined as a value obtained by dividing the circumference of a circle in the same area as a projected image of the negative electrode active material particle by the length of circumference of the projected image of the negative electrode active material particle. Preferably, the degree of sphericity may be defined by Mathematical Equation B previously described.

A weight ratio of the third negative electrode active material particle and the fourth negative electrode active material particle may be 1:99 to 49:51, preferably 5:95 to 45:55, and more preferably 10:90 to 40:60. When the ratio falls within the above ranges, the negative electrode active material particles with the large particle diameter may be included in an appropriate amount in the upper negative electrode active material layer 220, so that separation between the upper and lower negative electrode active material layers 210 may be prevented, and also, since the negative electrode active material with the small particle diameter may be included in a large amount, excellent output characteristics may be achieved.

An average particle diameter ($D_{50}$) ratio of the third negative electrode active material particles to the fourth negative electrode active material particles may be 1.1 to 10. Preferably, the average particle diameter ($D_{50}$) ratio of the third negative electrode active material particles to the fourth negative electrode active material particles may be 1.15 or greater, 1.20 or greater, 1.25 or greater, or 1.30 or greater, and 10 or less, 8 or less, 7 or less, 6 or less, 5 or less, 4.5 or less, 4 or less, 3.5 or less, 3.0 or less, or 2.5 or less. More preferably, the average particle diameter ($D_{50}$) ratio of the third negative electrode active material particles to the fourth negative electrode active material particles may be 1.1 to 2.5. When the ratio falls within the above ranges, it is preferable in that the filling rate between the negative electrode active material particles may increase, so that a high-density electrode may be achieved.

The average particle diameter ($D_{50}$) of the third negative electrode active material particles may be 3 μm to 13 μm. Preferably, the average particle diameter ($D_{50}$) of the third negative electrode active material particles may be 3 μm or greater, 3.5 μm or greater, 4 μm or greater, 4.5 μm or greater, 5.0 μm or greater, or 5.5 μm or greater, and 13 μm or less, 12 μm or less, 11 μm or less, 10 μm or less, 9 μm or less, 8 μm or less, or 7 μm or less. More preferably, the average particle diameter ($D_{50}$) of the third negative electrode active material particles may be 5.5 μm to 7 μm. When the average particle diameter falls within the above ranges, adhesion between the negative electrode active material particles may be improved, so that electrode adhesion characteristics may be improved.

The average particle diameter ($D_{50}$) of the fourth negative electrode active material particles may be 1 μm to 8 μm. Preferably, the average particle diameter ($D_{50}$) of the fourth negative electrode active material particles may be 1 μm or greater, 1.5 μm or greater, 2 μm or greater, or 2.5 μm or greater, and 8 μm or less, 7 μm or less, 6 μm or less, or 5 μm or less. More preferably, the average particle diameter ($D_{50}$) of the fourth negative electrode active material particles may be 1 μm to 5 μm. When the average particle diameter falls within the above ranges, ionic and electro conductivity in the negative electrode active material particle may be improved, so that the output characteristics may be improved.

The third negative electrode active material particle may have a BET specific surface area of 1 $m^2/g$ to 10 $m^2/g$. Preferably, the BET specific surface area of the first negative electrode active material particle may be 1 $m^2/g$ or greater, 1.5 $m^2/g$ or greater, 2 $m^2/g$ or greater, 2.5 $m^2/g$ or greater, 3 $m^2/g$ or greater, or 3.5 $m^2/g$ or greater, and 10 $m^2/g$ or less, 9 $m^2/g$ or less, 8 $m^2/g$ or less, 7 $m^2/g$ or less, 6 $m^2/g$ or less, or 5 $m^2/g$ or less. More preferably, the first negative electrode active material particle may have a BET specific surface area of 3 $m^2/g$ to 5 $m^2/g$. When the BET specific surface area falls within the above ranges, it may be preferable in that a side reaction between the negative electrode active material particle and an electrolyte is be not excessive, so that lifetime characteristics of a battery may be improved.

The fourth negative electrode active material particle may have a BET specific surface area of 2 m$^2$/g to 14 m$^2$/g. Preferably, the BET specific surface area of the second negative electrode active material particle may be 2 m$^2$/g or greater, 2.5 m$^2$/g or greater, 3 m$^2$/g or greater, 3.5 m$^2$/g or greater, or 4 m$^2$/g or greater, and 14 m$^2$/g or less, 12 m$^2$/g or less, 10 m$^2$/g or less, 9 m$^2$/g or less, 8 m$^2$/g or less, 7m$^2$/g or less, 6 m$^2$/g or less, or 5.5 m$^2$/g or less. More preferably, the second negative electrode active material particle may have a BET specific surface area of 4 m$^2$/g to 5.5 m$^2$/g. When the BET specific surface area falls within the above ranges, it may be preferable in that a side reaction between the negative electrode active material particle and an electrolyte is not excessive, so that lifetime characteristics of a battery may be improved.

The upper negative electrode active material layer 220 may have a thickness of 30 μm to 200 μm. Preferably, the thickness of the upper negative electrode active material layer 220 may be 30 μm or greater, 40 μm or greater, 50 μm or greater, 60 μm or greater, or 70 μm or greater, and 200 μm or less, 180 μm or less, 160 μm or less, 140 μm or less, or 130 μm or less. More preferably, the upper negative electrode active material layer 220 may have a thickness of 60 μm to 130 μm.

The upper negative electrode active material layer 220 may have a loading amount of 12.5 mg/25 cm$^2$ to 250 mg/25 cm$^2$. Preferably, the loading amount of the upper negative electrode active material layer 220 may be 12.5 mg/25 cm$^2$ or greater, 17.5 mg/25 cm$^2$ or greater, 22.5 mg/25 cm$^2$ or greater, 37.5 mg/25 cm$^2$ or greater, 42.5 mg/25 cm$^2$ or greater, 50 mg/25 cm$^2$ or greater, 55 mg/25 cm$^2$ or greater, or 60 mg/25 cm$^2$ or greater, and 250 mg/25 cm$^2$ or less, 200 mg/25 cm$^2$ or less, 175 mg/25 cm$^2$ or less, 150 mg/25 cm$^2$ or less, or 125 mg/25 cm$^2$ or less. More preferably, the upper negative electrode active material layer 220 may have a loading amount of 60 mg/25 cm$^2$ to 125 mg/25 cm$^2$.

The upper negative electrode active material layer 220 may have a porosity of 20% to 70%. Preferably, the porosity of the upper negative electrode active material layer 220 may be 23% or greater, 25% or greater, 27% or greater, 30% or greater, 33% or greater, or 35% or greater, and 70% or less, 65% or less, 60% or less, or 55% or less. More preferably, the porosity of the upper negative electrode active material layer 220 may be 35% to 55%. The porosity may be calculated by Mathematical Equation A previously described. When the porosity falls within the above ranges, the energy density per unit volume of a battery may increase, and the contact between the active material particles may become easy, so that the output characteristics may be improved.

A thickness ratio of the lower negative electrode active material layer 210 and the upper negative electrode active material layer 220 may be 1:5 to 5:1, preferably 1:4 to 4:1, and more preferably 1:3 to 3:1.

The sum of the loading amounts of the lower negative electrode active material layer 210 and the upper negative electrode active material layer 220 may be 25 mg/25 cm$^2$ to 500 mg/25 cm$^2$, preferably 100 mg/25 cm$^2$ to 350 mg/25 cm$^2$, and more preferably 120 mg/25 cm$^2$ to 250 mg/25cm$^2$. When the sum of the loading amounts falls within the above ranges, the energy density per unit volume of a battery may increase, and the resistance may be low, so that the output characteristics may be excellent.

The third negative electrode active material particle and the fourth negative electrode active material particle may be included in an amount of 60 wt% to 99 wt%, and preferably 75 wt% to 95 wt% in the upper negative electrode active material layer 220.

The upper negative electrode active material layer 220 may further include a second binder and/or a second conductive material, together with the third negative electrode active material particle and the fourth negative electrode active material particle.

The second binder may be used for binding between the third negative electrode active material particle and/or the fourth negative electrode active material particle, or adhesion between the upper negative electrode active material layer 220 and the lower negative electrode active material layer 210. For example, the second binder may include at least any one selected from the group consisting of polyvinylidene fluoride-hexafluoropropylene copolymer (PVDF-co-HFP), polyvinylidenefluoride (PVDF), polyacrylonitrile, polymethylmethacrylate, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, polyacrylic acid, an ethylene-propylene-diene monomer (EPDM), a sulfonated EPDM, a styrene-butadiene rubber (SBR), fluorine rubber, and materials with hydrogen thereof being substituted with Li, Na, Ca, or the like, and may also include various copolymers thereof.

The second binder may be included in an amount of 0.5 wt% to 10 wt%, and preferably 1 wt% to 5 wt% in the upper negative electrode active material layer 220.

The second conductive material may not be particularly limited as long as it does not cause chemical change in the relevant battery and has conductivity, and for example, graphite such as natural graphite or artificial graphite; carbon black including carbon black, acetylene black, ketjen black, channel black, furnace black, lamp black, thermal black, etc.; a conductive fiber such as a carbon fiber, or metal fiber; a conductive tube such as a carbon nanotube; fluorocarbon; metal powder including aluminum power, nickel powder, etc.; a conductive whisker including zinc oxide, potassium titanate, etc.; a conductive metal oxide such as titanium oxide; a conductive material such as a polyphenylene derivative, etc. may be used.

The second conductive material may be included in an amount of 0.5 wt% to 10 wt%, and preferably 1 wt% to 5 wt% in the upper negative electrode active material layer 220.

A negative electrode slurry for a lower layer including the first negative electrode active material particle and the second negative electrode active material particle, and selectively, the first binder, the first conductive material, and/or a solvent for forming the negative electrode slurry may be applied onto the current collector 100 and dried to prepare the lower negative electrode active material layer 210, or casting of the negative electrode slurry for the lower layer may be performed on a separate support, and then a film separated from the support may be laminated onto the current collector 100 to prepare the lower negative electrode active material layer 210. The upper negative electrode active material layer 220 may also be provided by preparing a negative electrode slurry for an upper layer in the same method as above, except that the third and fourth negative electrode active material particles, and selectively the second binder and/or the second conductive material are used.

The solvent for forming the negative electrode slurry may include at least one selected from the group consisting of distilled water, N-methyl-2-pyrrolidone (NMP), ethanol, methanol, and isopropyl alcohol, and preferably, distilled water, in terms of facilitating dispersion of, for example, the negative electrode active material particle, the binder, and/or the conductive material. The negative electrode slurry may have a solid content of 30 wt% to 80 wt%, and preferably 40 wt% to 70 wt%.

The preparation of the negative electrode 10 for a sodium secondary battery, where the negative electrode active material layer includes the lower negative electrode active material layer 210 and the upper negative electrode active material layer 220, is not particularly limited as long as it is capable of realizing the lower negative electrode active material layer 210 and the upper negative electrode active material layer 220 having the above-described characteristics. For example, the first and second negative electrode active material particles and the first binder and/or first conductive material may be added to a solvent for forming the negative electrode slurry (for example, distilled water) to prepare the negative electrode slurry for the lower layer, the third and fourth negative electrode active material particles and the second binder and/or second conductive material may be added to a solvent (for example, distilled water) to prepare the negative electrode slurry for forming the upper layer, and then these slurries may be applied to the current collector 100 to prepare the negative electrode 10 for a sodium secondary battery according to the present invention. More preferably, the negative electrode slurry for the lower layer, prepared as above, may be applied onto the current collector 100, and pressed and dried to form the lower negative electrode active material layer 210, and the negative electrode slurry for the upper layer, prepared as above, may be applied onto the lower negative electrode active material layer 210, pressed and dried to form the upper negative electrode active material layer 220, thereby preparing the negative electrode 10 for a sodium secondary battery according to the present invention. Meanwhile, while the negative electrode slurry for the lower layer is applied onto the current collector 100, the negative electrode slurry for the upper layer is applied onto the negative electrode slurry for the lower layer substantially at the same time, and pressed and dried at the same time to thereby prepare the negative electrode 10 for a sodium secondary battery according to the present invention.

The negative electrode 10 for a sodium secondary battery may have a porosity of 20% to 70%. Preferably, the porosity of the negative electrode 10 for a sodium secondary battery may be 20% or greater, 23% or greater, 25% or greater, 30% or greater, 33% or greater, or 35% or greater, and 70% or less, 65% or less, 60% or less, or 55% or less. More preferably, the porosity of the negative electrode 10 for a sodium secondary battery may be 35% to 55%. When the porosity falls within the above ranges, the energy density per unit volume of a battery may increase, and the resistance may be low, so that the output characteristics may be excellent.

## Sodium Secondary Battery

Hereinafter, a sodium secondary battery according to the present invention is described.

The sodium secondary battery according to the present invention includes the negative electrode 1 for a sodium secondary battery according to the present invention, previously described. More preferably, the sodium secondary battery according to the present invention includes the negative electrode 1 for a sodium secondary battery according to the present invention, a positive electrode opposed to the negative electrode 1 for a sodium secondary battery, a separator disposed between the negative electrode 1 for a sodium secondary battery and the positive electrode, and an electrolyte. Since the negative electrode 1 for a sodium secondary battery is previously described, the other components will be described hereinafter.

(Positive Electrode)

The positive electrode may be opposed to the negative electrode for a sodium secondary battery according to the present invention.

The positive electrode may include a positive electrode current collector; and a positive electrode active material layer positioned on at least one side of the positive electrode current collector.

The positive electrode current collector is not particularly limited as long as it does not cause chemical change in a battery, and has high conductivity. Preferably, the positive electrode current collector may include at least one selected from the group consisting of copper, stainless steel, aluminum, nickel, titanium, calcined carbon, and aluminum-cadmium alloy, and preferably, may include aluminum.

The positive electrode current collector may generally have a thickness of 3 to 500 $\mu$m.

The positive electrode current collector may also have microscopic irregularities on a surface to strengthen binding force of the negative electrode active material. For example, the positive electrode current collector may be used in various forms including a film, a sheet, a foil, a net, a porous body, a foam body, a non-woven fiber body, etc.

The positive electrode active material layer may include a positive electrode active material.

A compound capable of reversible intercalation and deintercalation of sodium may be used as the positive electrode active material. Particular examples may include a sodium metal oxide (where, $0<x\leq1$) such as $Na_xCoO_2$, $Na_xCo_{2/3}Mn_{1/3}O_2$, $Na_xFe_{1/2}Mn_{1/2}O_2$, $NaCrO_2$, $NaLi_{0.2}Ni_{0.2}sMn_{0.75}O_{2.35}$, $Na_{0.44}MnO_2$, $NaMnO_2$, $Na_2Fe_5Si_{12}O_{30}$, $Na_{0.7}VO_2$, or $Na_{0.33}V_2O_5$; a sodium metal phosphate such as $Na_3V_2(PO_4)_3$, $NaFePO_4$, $NaMn_{0.5}Fe_{0.5}PO_4$, $Na_3V_2(PO_4)_3$, $Na_3Fe_2(PO_4)_3$; a sodium metal fluorophosphate such as $Na_2FePO_4F$ or $Na_3V_2(PO_4)_3$ ; a sodium metal fluoride sulfoxide such as $NaFeSO_4F$; a sodium-transition metal composite metal oxide such as $NaFeO_2$, $NaMnO_2$, $NaNiO_2$, and $NaCoO_2$; a sodium metal fluoride such as $Na_3FeF_6$ or $Na_2MnF_6$; a sodium metal borate such as $NaFeBO_4$ or $Na_3Fe_2(BO_4)_3$; a chalcogen compound such as $TiS_2$, $ZrS_2$, $VS_2$, $V_2S_2$, $TaS_2$, $FeS_2$, or $NiS_2$, and any one thereof, or a mixture of two or more thereof may be used. Among these, a compound containing Fe may suppress elution of transition metal ions even when the temperature of electrolyte rises in a battery, and as a result, cycle characteristics and discharge capacity retention rate of the sodium secondary battery may be improved. In addition, the chalcogen compound such as $TiS_2$ and $ZrS_2$ may be capable of fast intercalation and deintercalation of sodium ions, and may intercalate and deintercalate sodium ions at a higher level than that of the negative electrode when used in combination with a metallic sodium or the alloy-based negative electrode active material, thereby providing further improved reactivity.

The positive electrode active material may be included in an amount of 80 wt% to 99 wt%, and preferably in an amount of 92 wt% to 98.5 wt% in the positive electrode active material layer in consideration of sufficient capacity exhibition of the positive electrode active material.

The positive electrode active material layer may further include a binder and/or a conductive material together with the positive electrode active material previously described.

The binder is a component that assists binding between the active material and the conductive material, etc., and binding to the current collector, and may preferably include at least one selected from the group consisting of polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene ter polymer (EPDM), a sulfonated EPDM, a styrene-butadiene rubber, and fluorine rubber, and may preferably include polyvinylidene fluoride.

The binder may be included in an amount of 1 wt% to 20 wt%, and preferably in an amount of 1.2 wt% to 10 wt% in the positive electrode active material layer in terms of securing sufficient binding force between the components such as the positive electrode active material.

The conductive material may be used to assist and improve conductivity of a secondary battery, and is not particularly limited as long as it does not cause chemical change and has conductivity. Preferably, the conductive material may include at least one selected from the group consisting of graphite such as natural graphite or artificial graphite; carbon black including carbon black, acetylene black, ketjen black, channel black, furnace black, lamp black, thermal black, etc.; a conductive fiber such as a carbon fiber or a metal fiber; a conductive tube such as a carbon nanotube; fluorocarbon; metal powder including aluminum powder, nickel powder, etc.; a conductive whisker including zinc oxide, potassium titanate, etc.; a conductive metal oxide such as titanium oxide; and a polyphenylene derivative, and may preferably include carbon black in terms of improving conductivity.

The conductive material may be included in an amount of 1 wt% to 20 wt%, and preferably in an amount of 1.2 wt% to 10 wt% in the positive electrode active material layer in terms of securing sufficient electrical conductivity.

The positive electrode active material layer may have a thickness of 30 $\mu$m to 400 $\mu$m, and preferably 50 $\mu$m to 110 $\mu$m.

A positive electrode slurry including the positive electrode active material, selectively the binder and the conductive material, and a solvent for forming the positive electrode slurry may be applied onto the positive electrode current collector, and then dried and pressed to prepare the positive electrode.

The solvent for forming the positive electrode slurry may include an organic solvent such as N-methyl-2-pyrrolidone (NMP), which may be used in an amount such that the positive electrode active material, and selectively the binder and conductive material, and the like may be included in a desirable viscosity. For example, the solvent for forming the positive electrode slurry may be included in the positive electrode slurry such that a concentration of solid content including the positive electrode active material, and selectively the binder and conductive material becomes 50 wt% to 95 wt%, and preferably 70 wt% to 90 wt%.

(Separator)

A separator according to the present invention separates the negative electrode and the positive electrode, and provides a movement path of sodium ions, any separators generally used in a secondary battery may be used, and the type is not particularly limited. For example, as the separator, a porous polymer film prepared with a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used, or a porous non-woven fiber formed of glass fiber with a high melting point, a polyethylene terephthalate fiber, etc., may also be used. Furthermore, a coated separator including a ceramic component or a polymer material may also be used in order to secure heat resistance or mechanical strength, and may be selectively used in a single-layer or multi-layer structure.

(Electrolyte)

An electrolyte according to the present invention may include an organic liquid electrolyte, an inorganic liquid electrolyte, a solid polymer electrolyte, a gel-type polymer electrolyte, a solid inorganic electrolyte, a molten-type inorganic electrolyte, etc. which may be used in preparation of a sodium secondary battery, and the type is not limited thereto.
Preferably, the electrolyte may include an organic solvent and a sodium salt.
Any organic solvent may be used as the organic solvent, without particular limitation, as long as it may function as a medium through which ions involved in an electrochemical reaction of the battery may move. Preferably, as the organic solvent, an ester-based solvent including methyl acetate, ethyl acetate, $\gamma$-butyrolactone, $\varepsilon$-caprolactone, etc.; an ether-based solvent including dibutyl ether, tetrahydrofuran, or the like; a ketone-based solvent including cyclohexanone, etc.; an aromatic hydrocarbon-based solvent including benzene, fluorobenzene, etc.; a carbonate-based solvent including dimethylcarbonate (DMC), diethylcarbonate (DEC), methylethylcarbonate (MEC), ethylmethylcarbonate (EMC), ethylenecarbonate (EC), propylene carbonate (PC), etc.; an alcohol-based solvent including ethylalcohol, isopropyl alcohol, etc.; nitriles including R-CN (where, R is a linear, branched, or cyclic C2 to 20 hydrocarbon group, and may include a double-bond, an aromatic ring or an ether bond), etc.; amides including dimethylformamide, etc.; dioxolanes including 1,3-dioxolane, etc.; or sulfolanes may be used.
Any compound capable of providing sodium ions that are used in a sodium secondary battery may be used for the sodium salt without particular limitation. Preferably, as the sodium salt, $NaPF_6$, $NaClO_4$, $NaAsF_6$, $NaBF_4$, $NaCF_3SO_3$, $NaB(C_6H_5)_4$, $NaC_4F_9SO_3$, $NaN(C_2F_5SO_3)_2$, $NaN(C_2F_5SO_2)_2$, $NaN(CF_3SO_2)_2$, etc. may be used. The sodium salt may be used in a concentration range of 0.1 to 2.0 M.
In addition to the electrolyte components, at least one additive, for example, a halo-alkylene carbonate-based compound such as fluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in order to improve lifetime characteristics of a battery, suppress the reduction in battery capacity, and improve discharge capacity of the battery. At this time, the additive may be included in the amount of 0.1 to 5 wt% on the basis of the total weight of the electrolyte.
The sodium secondary battery including the negative electrode for a sodium secondary battery according to the present invention, previously described, may be applied to the field of mobile devices such as a mobile phone, a laptop computer, and a digital camera, to the field of electric vehicles such as a hybrid electric vehicle (HEV), and the like.
Hereinafter, examples of the present invention will be described in detail so that those skilled in the art may easily carry out the present invention. However, the present invention may be implemented in several different forms, and is not limited to the examples to be described herein.

**Example and Comparative Example**

Example 1: Preparation of Negative Electrode

Hard carbon (average particle diameter ($D_{50}$): 10.1 $\mu$m, specific surface area : 3.0 m$^2$/g) was prepared as a first negative electrode active material, hard carbon (average particle diameter ($D_{50}$): 7.6 $\mu$m, specific surface area : 3.7 m$^2$/g) was prepared as a second negative electrode active material, hard carbon (average particle diameter ($D_{50}$): 6.0 $\mu$m, specific surface area : 4.1 m$^2$/g) was prepared as a third negative electrode active material, and hard carbon (average particle diameter ($D_{50}$): 4.5 $\mu$m, specific surface area : 4.7 m$^2$/g) was prepared as a fourth negative electrode active material.
Carbon black (C65) was prepared as a conductive material, and SBR-CMC was prepared as a binder.
As a negative electrode slurry for a lower layer, the first negative electrode active material and the second negative electrode active material were mixed such that the weight ratio became 90:10, and then the mixed negative electrode active material, the conductive material, and the binder were mixed in a solvent (water) such that the weight ratio became 95:1:4.

As a negative electrode slurry for an upper layer, the third negative electrode active material and the fourth negative electrode active material were mixed such that the weight ratio became 10:90, and then the mixed negative electrode active material, the conductive material, and the binder were mixed in a solvent (water) such that the weight ratio became 95:1:4.

The prepared negative electrode slurry for the lower layer was applied onto an aluminum foil (thickness: 20 $\mu$m) as a current collector, and then dried in a vacuum oven at 60 °C for 1 hour to form a lower negative electrode active material layer. After this, the prepared negative electrode slurry for the upper layer was applied onto the lower negative electrode active material layer, and then dried in a vacuum oven at 60 °C for 1 hour to form an upper negative electrode active material layer. After this, the prepared upper negative electrode active material layer was dried in a vacuum oven at 120 °C for 12 hours, and then roll-pressed to prepare a negative electrode for a sodium secondary battery. Finally, the negative electrode for a sodium secondary battery, in which the current collector, the lower negative electrode active material layer, and the upper negative electrode active material layer were disposed in sequence, was prepared.

At this time, the lower negative electrode active material layer had a loading amount of 90 mg/25 cm$^2$ and a thickness of 100 $\mu$m, and the upper negative electrode active material layer had a loading amount of 90 mg/25 cm$^2$, and a thickness of 100 $\mu$m.

**Examples 2 to 3 and Comparative Examples 1 to 5**

Negative electrodes were prepared in the same method as that of Example 1, except that the types and weight ratios of the negative electrode active materials included in the lower and upper negative electrode active material layers were adjusted as listed in Table 1 and Table 2 below.

[Table 1]

| | Lower negative electrode active material layer | | | | Upper negative electrode active material layer | | | |
|---|---|---|---|---|---|---|---|---|
| | Weight ratio | | Loading amount (mg/2 5cm$^2$) | Thickness ($\mu$m) | Weight ratio | | Loading amont (mg/2 5cm$^2$) | Thickness ($\mu$m) |
| | First negative electrode active material | Second negative electrode active material | | | Third negative electrode active material | Fourth negative electrode active material | | |
| Example 1 | 90 | 10 | 90 | 100 | 10 | 90 | 90 | 100 |
| Example 2 | 70 | 30 | 90 | 100 | 30 | 70 | 90 | 100 |
| Example 3 | 60 | 40 | 90 | 100 | 40 | 60 | 90 | 100 |
| Comparative Example 1 | 50 | 50 | 90 | 100 | 50 | 50 | 90 | 100 |
| Comparative Example 2 | 30 | 70 | 90 | 100 | 50 | 50 | 90 | 100 |
| Comparative Example 3 | 50 | 50 | 90 | 100 | 70 | 30 | 90 | 100 |
| Comparative Example 4 | 100 | 0 | 90 | 100 | 0 | 100 | 90 | 100 |

[Table 2]

| | Lower negative electrode active material layer | | | | Upper negative electrode active material layer | | | |
|---|---|---|---|---|---|---|---|---|
| | Weight ratio | | Loading amount (mg/2 5cm$^2$) | Thickness ($\mu$m) | Weight ratio | | Loading amount (mg/2 5cm$^2$) | Thickness ($\mu$m) |
| | Third negative electrode active material | Fourth negative electrode active material | | | First negative electrode active material | Second negative electrode active material | | |
| Comparative Example 5 | 0 | 100 | 90 | 100 | 100 | 0 | 90 | 100 |

**Experimental Example 1: Evaluation on High Rate Performance**

(Preparation of Coin Half Cell)

A separator (Glass fiber of Whatman) was disposed between a positive electrode (Na metal) and the negative electrode prepared according to each of Examples 1 to 3 and Comparative Examples 1 to 5, and then an electrolyte solution was injected to prepare a coin half cell according to each of the examples and comparative examples.
As the electrolyte solution, a non-aqueous electrolyte solution solvent containing ethylene carbonate (EC) and propylene carbonate (PC) mixed in a volume ratio of 5:5, in which fluoroethylene carbonate (FEC) was added in an amount of 2 wt% on the basis of the solvent, and NaPF$_6$ with 1 M was dissolved, was used.

(Evaluation on High Rate Performance)

For the coin half cells, according to Examples 1 to 3 and Comparative Examples 1 to 5, prepared according to Experimental Example 1, the ratio of 5 C discharge capacity to 0.1 C discharge capacity was measured, and the high rate performance was evaluated.
In particular, the coin half cell was charged with a constant current of 0.3 C to 2.0 V at 25 °C, and then discharged in CCCV with 0.1 C, 5.0 C rate to 0 V, and the discharge capacity according to the rate condition was measured.
The measurement results were listed in Table 3 below.

**Experimental Example 2: Evaluation on Adhesive Force**

For the negative electrodes prepared according to Examples 1 to 3 and Comparative Examples 1 to 5, adhesive force between the current collector and the negative electrode active material layer was measured.
In particular, the negative electrode prepared according to each of Examples 1 to 3 and Comparative Examples 1 to 5 was cut into a size of 150 mm length and 20 mm width, and a surface of the electrode was attached to a slide glass of 75 mm length and 25 mm width in a length direction using a double-sided tape.
That is, the slide glass was attached to a region corresponding to a half of the length direction of the negative electrode. Then, a roller of 2 kg weight was rubbed 10 times so that the double-sided tape was attached uniformly, and an evaluation sample was prepared therefrom.
A slide glass portion of the evaluation sample was fixed to a sample stage of a universal testing machine (UTM), and half of the negative electrode not attached to the slide glass was connected to a load cell of the UTM machine.
The load cell was moved up to 50 mm with a speed of 100 mm/min, and the weight applied to the load cell was measured. At this time, the minimum value of the weight measured at a 20 mm to 40 mm section of the moving section was measured as an electrode adhesive force (gf/20 mm) of each sample. The evaluation was performed 5 times in total for each negative electrode, and the average value thereof was listed in Table 3 below.

[Table 3]

| | Experimental Example 1 | | | Experimental Example 2 |
|---|---|---|---|---|
| | 5.0 C discharge capacity (mAh/g) | 0.1 C discharge capacity (mAh/g) | 5.0 C discharge capacity/ 0.1 C discharge capacity (%) | Adhesive force (gf/20 mm) |
| Example 1 | 161 | 216 | 74.7 | 54 |
| Example 2 | 159 | 209 | 76.2 | 50 |
| Example 3 | 157 | 205 | 76.7 | 48 |
| Comparative Example 1 | 149 | 206 | 72.4 | 40 |
| Comparative Example 2 | 160 | 221 | 72.3 | 35 |
| Comparative Example 3 | 161 | 216 | 74.7 | 43 |
| Comparative Example 4 | 141 | 194 | 72.5 | 36 |
| Comparative Example 5 | 115 | 154 | 74.4 | 28 |

Referring to Table 2 above, in case of Examples 1 to 3, it can be seen that both of the rate performance and adhesive force were excellent, compared to the case of Comparative Examples 1 to 5.

In particular, in case of Comparative Example 1, it can be seen that the weight ratios of the first and second negative electrode active materials, included in the lower negative electrode active material layer, were the same, and the weight ratios of the third and fourth negative electrode active materials included in the upper negative electrode active material layer were the same, so that both of the rate performance and adhesive force were reduced.

In case of Comparative Example 2, it can be seen that a negative electrode active material in a large particle diameter was included in a less amount than that of a negative electrode active material in a small particle diameter in the lower negative electrode active material layer, so that both of the rate performance and adhesive force were reduced.

In case of Comparative Example 3, it can be seen that a negative electrode active material in a small particle diameter was included in a less amount than that of a negative electrode active material in a large particle diameter in the upper negative electrode active material layer, so that both of the rate performance and adhesive force were reduced.

In case of Comparative Example 4, it can be seen that only the negative electrode active material in a large particle diameter was included in the lower negative electrode active material layer, and only the negative electrode active material in a small particle diameter was included in the upper negative electrode active material layer, so that both of the rate performance and adhesive force were reduced.

In case of Comparative Example 5, it can be seen that only the negative electrode active material in a small particle diameter was included in the lower negative electrode active material layer, and only the negative electrode active material in a large particle diameter was included in the upper negative electrode active material layer, so that both of the rate performance and adhesive force were reduced.

<Description of the Symbols>

    10: negative electrode for sodium secondary battery
    100: current collector
    210: lower negative electrode active material layer
    220 upper negative electrode active material layer

Claims

1.   A negative electrode for a sodium secondary battery, comprising:

    a current collector; a lower negative electrode active material layer disposed on the current collector; and an upper negative electrode active material layer disposed on the lower negative electrode active material layer,
    wherein the lower negative electrode active material layer includes a first negative electrode active material particle and a second negative electrode active material particle,

the upper negative electrode active material layer includes a third negative electrode active material particle and a fourth negative electrode active material particle,

each of the first negative electrode active material particle to the fourth negative electrode active material particle includes hard carbon,

an average particle diameter ($D_{50}$) of the first negative electrode active material particle is larger than an average particle diameter ($D_{50}$) of the second negative electrode active material particle,

an average particle diameter ($D_{50}$) of the third negative electrode active material particle is larger than an average particle diameter ($D_{50}$) of the fourth negative electrode active material particle,

a weight of the first negative electrode active material particle is greater than a weight of the second negative electrode active material particle, and

a weight of the third negative electrode active material particle is less than a weight of the fourth negative electrode active material particle.

2. The negative electrode of claim 1, wherein each of the first negative electrode active material particle to the fourth negative electrode active material particle has a spherical shape.

3. The negative electrode of claim 1, wherein a weight ratio of the first negative electrode active material particle and the second negative electrode active material particle is 51:49 to 99:1.

4. The negative electrode of claim 1, wherein an average particle diameter ($D_{50}$ ratio of the first negative electrode active material particle to the second negative electrode active material particle is 1.1 to 10.

5. The negative electrode of claim 1, wherein the first negative electrode active material particle has an average particle diameter ($D_{50}$) of 5 $\mu$m to 15 $\mu$m, and
the second negative electrode active material particle has an average particle diameter ($D_{50}$) of 1 $\mu$m to 10 $\mu$m

6. The negative electrode of claim 1, wherein the first negative electrode active material particle has a BET specific surface area of 1 m$^2$/g to 10 m$^2$/g, and
the second negative electrode active material particle has a BET specific surface area of 1.5 m$^2$/g to 12 m$^2$/g

7. The negative electrode of claim 1, wherein the lower negative electrode active material layer has a thickness of 30 $\mu$m to 200 $\mu$m.

8. The negative electrode of claim 1, wherein the lower negative electrode active material layer has a loading amount of 12.5 mg/25 cm$^2$ to 250 mg/25 cm$^2$.

9. The negative electrode of claim 1, wherein a weight ratio of the third negative electrode active material particle and the fourth negative electrode active material particle is 1:99 to 49:51.

10. The negative electrode of claim 1, wherein an average particle diameter ($D_{50}$12. ratio of the third negative electrode active material particle to the fourth negative electrode active material particle is 1.1 to 10.

11. The negative electrode of claim 1, wherein the third negative electrode active material particle has an average particle diameter ($D_{50}$) of 3 $\mu$m to 13 $\mu$m, and
the fourth negative electrode active material particle has an average particle diameter ($D_{50}$) of 1 $\mu$m to 8 $\mu$m.

12. The negative electrode of claim 1, wherein the third negative electrode active material particle has a BET specific surface area of 1 m$^2$/g to 10 m$^2$/g, and
the fourth negative electrode active material particle has a BET specific surface area of 2 m$^2$/g to 14 m$^2$/g.

13. The negative electrode of claim 1, wherein the upper negative electrode active material layer has a thickness of 30 $\mu$m to 200 $\mu$m.

14. The negative electrode of claim 1, wherein the upper negative electrode active material layer has a loading amount of 12.5 mg/25 cm$^2$ to 250 mg/25 cm$^2$.

15. A sodium secondary battery comprising the negative electrode for a sodium secondary battery of claim 1.

FIG. 1

<u>10</u>

## INTERNATIONAL SEARCH REPORT

| International application No. |
|---|
| **PCT/KR2024/016819** |

**A.    CLASSIFICATION OF SUBJECT MATTER**

**H01M 4/13**(2010.01)i; **H01M 4/36**(2006.01)i; **H01M 4/587**(2010.01)i; **H01M 10/054**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/13(2010.01); H01M 10/052(2010.01); H01M 10/0525(2010.01); H01M 4/133(2010.01); H01M 4/36(2006.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 소듐 이차전지(sodium secondary battery), 음극(anode), 음극 활물질(anode active material), 하드 카본(hard carbon), 평균 입경(average diameter, D50), 중량(weight)

**C.    DOCUMENTS CONSIDERED TO BE RELEVANT**

| Category* | Citation of document, with indication, where appropriate, of the relevant passages | Relevant to claim No. |
|---|---|---|
| Y | CN 116435503 A (XIAMEN HAICHEN ENERGY STORAGE TECHNOLOGY CO., LTD.) 14 July 2023 (2023-07-14)<br>See abstract; claims 1, 3, 6 and 8; and paragraph [0062]. | 1-15 |
| Y | KR 10-2022-0051494 A (SK ON CO., LTD.) 26 April 2022 (2022-04-26)<br>See claims 1-4 and 8; and paragraphs [0027], [0039], [0051]-[0053], [0056] and [0122]-[0132]. | 1-15 |
| A | CN 115498139 A (SUNWODA ELECTRIC VEHICLE CELL CO., LTD.) 20 December 2022 (2022-12-20)<br>See abstract; and claims 1-10. | 1-15 |
| A | KR 10-1966144 B1 (LG CHEM, LTD.) 05 April 2019 (2019-04-05)<br>See abstract; and claims 1, 4 and 6-20. | 1-15 |
| A | KR 10-2022-0094183 A (LG ENERGY SOLUTION, LTD.) 05 July 2022 (2022-07-05)<br>See abstract; and claims 1-10. | 1-15 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **10 February 2025** | **10 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/016819**

| Patent document cited in search report | | | Publication date (day/month/year) | Patent family member(s) | | | Publication date (day/month/year) |
|---|---|---|---|---|---|---|---|
| CN | 116435503 | A | 14 July 2023 | None | | | |
| KR | 10-2022-0051494 | A | 26 April 2022 | KR | 10-2024-0040713 | A | 28 March 2024 |
| | | | | KR | 10-2651696 | B1 | 26 March 2024 |
| | | | | US | 12051799 | B2 | 30 July 2024 |
| | | | | US | 2022-0123284 | A1 | 21 April 2022 |
| | | | | US | 2024-0332511 | A1 | 03 October 2024 |
| CN | 115498139 | A | 20 December 2022 | None | | | |
| KR | 10-1966144 | B1 | 05 April 2019 | CN | 108701816 | A | 23 October 2018 |
| | | | | CN | 108701816 | B | 12 November 2021 |
| | | | | EP | 3396745 | A2 | 31 October 2018 |
| | | | | EP | 3396745 | A4 | 12 June 2019 |
| | | | | EP | 3396745 | B1 | 01 November 2023 |
| | | | | KR | 10-2018-0035693 | A | 06 April 2018 |
| | | | | US | 2019-0305308 | A1 | 03 October 2019 |
| KR | 10-2022-0094183 | A | 05 July 2022 | US | 2024-0047637 | A1 | 08 February 2024 |
| | | | | WO | 2022-145993 | A1 | 07 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230179484

- KR 1020240150135